(19) **Europäisches Patentamt European Patent Office Office européen des brevets**

(11) **EP 2 895 550 B1**

(12) **EUROPEAN PATENT SPECIFICATION**

(45) Date of publication and mention of the grant of the patent:
**02.05.2018 Bulletin 2018/18**

(21) Application number: **13760216.5**

(22) Date of filing: **30.08.2013**

(51) Int Cl.:
*C08L 23/08* (2006.01)      *C08F 210/16* (2006.01)
*C08J 5/18* (2006.01)      *B32B 27/32* (2006.01)

(86) International application number:
**PCT/US2013/057463**

(87) International publication number:
**WO 2014/042898 (20.03.2014 Gazette 2014/12)**

(54) **ETHYLENE-BASED POLYMERS AND ARTICLES MADE THEREFROM**

ETHYLENBASIERTE POLYMERE UND DARAUS GEFERTIGTE ARTIKEL

POLYMÈRES À BASE D'ÉTHYLÈNE ET ARTICLES COMPOSÉS DE CEUX-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.09.2012 US 201261700966 P**
**08.11.2012 EP 12191880**
**04.12.2012 US 201261733119 P**
**14.02.2013 EP 13155249**

(43) Date of publication of application:
**22.07.2015 Bulletin 2015/30**

(73) Proprietor: **ExxonMobil Chemical Patents Inc.**
**Baytown, TX 77520 (US)**

(72) Inventors:
• **BEST, Steven, A.**
**The Woodlands, TX 77381 (US)**
• **BERG, Brian, R.**
**Humble, TX 77346 (US)**

(74) Representative: **ExxonMobil Chemical Europe Inc.**
**IP Law Europe**
**Hermeslaan 2**
**1831 Machelen (BE)**

(56) References cited:
**WO-A1-98/44011**      **WO-A1-2007/130277**
**WO-A1-2010/034461**

Remarks:
The file contains technical information submitted after the application was filed and not included in this specification

**Description**

## FIELD OF THE INVENTION

The present invention is directed to metallocene-catalyzed ethylene-based polymers, blends of such ethylene-based polymers, and articles made therefrom. Methods of making articles, particularly films, are also described.

## BACKGROUND OF THE INVENTION

Both low density polyethylenes (LDPEs) made using a conventional high-pressure process and linear low density polyethylenes (LLDPEs) produced using a Ziegler-Natta catalyst in a gas phase process, and blends and articles made therefrom, are generally known in the art. While such polyethylenes are sometimes preferred because they provide relatively low-cost solutions to a number of needs, their properties render them less desirable than other polyethylenes for a number of applications. For example, LLDPE and LDPE films cannot be produced in high-stalk bubble blown film lines due to a lack of melt strength, and therefore cannot be produced with balanced machine direction (MD) - transverse direction (TD) shrink properties.

To meet higher TD shrinkability requirements, a double-bubble extrusion process may be used, but that process requires that the LLDPE either be cross-linked or coextruded with polypropylene. Those films provide good optical properties and high TD shrinkability, but very low MD and TD tear resistance.

High density, high crystallinity and high melt strength polyethylene materials like conventional high density polyethylene (HDPE) are well suited for a high-stalk bubble blown film extrusion process. Through the high-stalk process, HDPE film is able to achieve high TD orientation which will cause high TD shrinkability. However, HDPE film will also exhibit low toughness, *i.e.,* low dart, puncture and tear resistance, and poor optical properties, *i.e.,* high haze, low gloss and low clarity.

There is a need for a polymer and a process which are able to produce polyethylene film with high TD shrinkability even at thin gauge, good toughness (particularly as measured by, *e.g.,* MD tear, dart and puncture resistance) and good optical properties (*e.g.,* low haze and high gloss). Certain metallocene-catalyzed polyethylenes are able to be used in blends for a high-stalk process because of the melt strength they exhibit, and are also able to contribute desired toughness and optical properties to the films that are produced therewith. There is also a need for a high melt strength polymer useful for making heavy gauge films (*e.g.,* > 10 mil thick) and which yields improved toughness properties, *i.e.,* impact and tear strength and stress crack resistance. There is a further need for a high melt strength polymer suitable for blow molding and thermoforming applications resulting in stiff finished products with high gloss levels and stress cracking resistance.

## SUMMARY OF THE INVENTION

(deleted)

(deleted)

The ethylene-based polymers of the invention comprise 80.0 to 99.0 wt.% of polymer units derived from ethylene and 1.0 to 20.0 wt.% of polymer units derived from one or more $C_3$ to $C_{20}$ $\alpha$-olefin comonomers and have a Comonomer Branch Distribution Index (CDBI) $\geq$ 70.0%, preferably $\geq$ 80.0%, preferably $\geq$ 85.0%, preferably $\geq$ 90.0%; a melt index, $I_{2.16}$, of 0.05 to 0.35 g/10 min.; a density of from 0.935 to 0.955 g/cm³; and a MWD of 2.5 to 5.5, preferably 4.0 to 5.0. Preferably, the ethylene-based polymers have 0.05 to 0.5 long-chain branches per/1000C atoms.

The ethylene-based polymer may be blended with one or more other polymer components. Embodiments of the invention include blend compositions comprising: 0.1 to 99.9 wt.%, of an ethylene-based polymer, and 0.1 to 99.9 wt.% of a polymer selected from the group consisting of: high density polyethylene, linear low density polyethylene, low density polyethylene, medium density polyethylene, differentiated polyethylene and combinations thereof.

The ethylene-based compositions and blends thereof described herein may be used to make various articles of manufacture. Articles may be made by any suitable method (*e.g.,* injection molding, blow molding, extrusion coating, foaming, casting, and combinations thereof.) Some such articles may be extruded monolayer or multilayer films. The ethylene-based polymers and blends thereof are particularly suitable for use in thermoformed extruded sheets, particularly multilayer thermoformed extruded sheets, wherein the cap layer of the sheet comprises the ethylene-based polymer or blend thereof. Ethylene-based polymers described herein may also be particularly useful in pipe applications. In other embodiments, the article may be a multilayer film having a core layer comprising an ethylene-based polymer or blend thereof. Such films typically include outer layers A and B in surface contact with opposing surfaces of the core layer. Some such films have beneficial shrink and tear properties (*e.g.,* a TD shrink of 20.0 to 70.0% or a combination of beneficial shrink and tear properties e.g., a TD shrink of 20.0 to 70.0% and a MD Elmendorf Tear of 0.5 to 10 g/µm).

**BRIEF DESCRIPTION OF THE DRAWINGS**

Figure 1 is a graphical representation of a Van Gurp-Palmen analysis comparing the Loss Angle versus Complex Modulus behavior of an inventive ethylene-based polymer according to Example 1 and comparative polymers of Examples 2-6.

Figure 2 is a graphical representation of the Loss Angle at a Complex Modulus 2,000 Pa versus Strain Hardening Ratio for an inventive ethylene-based polymer according to Example 1 and comparative polymers of Examples 5, 7-9, and 11-12.

**DESCRIPTION OF EMBODIMENTS OF THE INVENTION**

Embodiments of the invention provide a polymer composition having an unexpected combination of properties, particularly when formed into articles such as films. The compositions have surprising rheological properties indicative of unusual polymer chain structure. Some polymers have high melt strength, making them particularly suitable for high-stalk blown film processes. In coextruded films such polymer compositions can provide a core layer that imparts an unexpected balance of shrinkage in the transverse direction (TD) and a tear strength in the machine direction (MD). In articles such as thermoformed sheets, the polymer compositions provide a surface layer having unexpected combination of gloss and scratch resistance, particularly in articles for coextruded sheet applications.

In the following description, all numbers disclosed herein are approximate values, regardless whether the word "about" or "approximate" is used in connection therewith. They may vary by 1%, 2%, 5%, and sometimes, 10 to 20%. Whenever a numerical range with a lower limit, $R^L$ and an upper limit, $R^U$, is disclosed, any number falling within the range is specifically disclosed. In particular, the following numbers within the range are specifically disclosed: R= $R^L$ +k*($R^U$ - $R^L$), wherein k is a variable ranging from 1% to 100% with a 1% increment, *i.e.*, k is 1%, 2%, 3%, 4%, 5%, ... , 50%, 51%, 52%, ..., 95%, 96%, 97%, 98%, 99%, or 100%. Moreover, any numerical range defined by two R numbers as defined in the above is also specifically disclosed.

The ethylene-based polymer compositions herein refer to a polyethylene copolymer having 99.0 to 80.0 wt.%, 99.0 to 85.0 wt.%, 99.0 to 87.5 wt.%, 99.0 to 90.0 wt.%, 99.0 to 92.5 wt.%, 99.0 to 95.0 wt.%, or 99.0 to 97.0 wt.%, of polymer units derived from ethylene and 1.0 to 20.0 wt.%, 1.0 to 15.0 wt.%, 1.0 to 12.5 wt.%, 1.0 to 10.0 wt.%, 1.0 to 7.5 wt.%, 1.0 to 5.0 wt.%, or 1.0 to 3.0 wt.% of polymer units derived from one or more $C_3$ to $C_{20}$ $\alpha$-olefin comonomers, preferably $C_3$ to $C_{10}$ $\alpha$-olefins, and more preferably $C_4$ to $C_8$ $\alpha$-olefins. The $\alpha$-olefin comonomer may be linear or branched, and two or more comonomers may be used, if desired. Examples of suitable comonomers include propylene, butene, 1-pentene; 1-pentene with one or more methyl, ethyl, or propyl substituents; 1-hexene; 1-hexene with one or more methyl, ethyl, or propyl substituents; 1-heptene; 1-heptene with one or more methyl, ethyl, or propyl substituents; 1-octene; 1-octene with one or more methyl, ethyl, or propyl substituents; 1-nonene; 1-nonene with one or more methyl, ethyl, or propyl substituents; ethyl, methyl, or dimethyl-substituted 1-decene; 1-dodecene; and styrene. Particularly suitable comonomers include 1-butene, 1-hexene, and 1-octene, 1-hexene being most preferred.

Typically, although not necessarily, the ethylene-based polymers have a complex modulus, $G^*_{60}$, $< 2.50 \times 10^3$ Pa, preferably $< 2.00 \times 10^3$ Pa. The complex modulus can be measured at other loss angles. Some particular ethylene-based polymers have complex modulus at a loss angle, $\delta$, of 50°, $G^*_{50}$, $< 50.00 \times 10^3$ Pa, preferably $< 25.00 \times 10^3$ Pa, preferably $< 20.00 \times 10^3$ Pa, preferably $< 10.00 \times 10^3$ Pa, preferably $< 5.00 \times 10^3$ Pa. Some ethylene based polymers have a $G^*$ = 2,000 at a loss angle, $\delta$, of $\leq 62.5°$, particularly $\leq 60.0°$, or from 60.0° to 62.5°, *i.e.*, $G^*_{\leq 62.5} = 2.00 \times 10^3$, $G^*_{\leq 60.0} = 2.00 \times 10^3$, or $G^*_{60.0-62.5} = 2.00 \times 10^3$.

Complex modulus and loss angles, $\delta$, may be obtained from rheological data determined at the test temperature of 190 °C. and analyzed using the Van Gurp-Palmen treatment (reference: M.Van Gurp and J. Palmen, Rheology Bulletin, 67, 5, 1998), whereby the loss angle, $\delta$, (wherein $\delta$ = arctan$^{-1}$(G"/G'); G" represents the loss modulus (Pa) and G' represents the storage modulus (Pa)) is plotted against the absolute value of the complex modulus $|G^*|$ = (G'2 + G"2)"2. This representation of linear viscoelastic data is a powerful means of characterizing molecular and structural features of polymers. For example, low levels of long-chain branching in polyolefins can be detected and quantified on a relative basis, using this methodology.

Dynamic shear melt rheological data was measured with an Advanced Rheometrics Expansion System (ARES) using parallel plates (diameter=25 mm) at 190°C. using a pristine compression molded sample at each temperature. The measurements were made over the angular frequency that ranged from 0.01-100 rad/s. Depending on the molecular weight and temperature, strains of 10% and 15% were used and linearity of the response was verified. A nitrogen stream was circulated through the sample oven to minimize chain extension or cross-linking during the experiments. All the samples were compression molded at 190°C. and no stabilizers were added. A sinusoidal shear strain is applied to the material. If the strain amplitude is sufficiently small, the material behaves linearly.

While some polymers may be characterized by a value of the complex modulus at a particular loss angle as described above, another way to describe some ethylene-based polymers of the invention relates to features of the complex modulus values, $G^*$, when considered over the range of loss angles from 30 to 90°. Such ethylene-based polymers may have a local maximum loss angle at a $G^*$ value of $2.50 \times 10^4$ to $1.00 \times 10^6$ Pa, preferably $2.50 \times 10^4$ to $1.00 \times 10^5$ Pa and a local minimum loss angle at a complex modulus, $G^*$, of $1.00 \times 10^4$ to $3.00 \times 10^4$ Pa, preferably $1.25 \times 10^4$ to $2.00 \times 10^4$ Pa. In some such ethylene-based polymers, the local maximum loss angle is from 40.0 to 50.0°, preferably 40.0 to 45.0°, more preferably 42.5 to 45.0°. While not critical, some ethylene-based polymers may have a local minimum loss angle of from 40.0 to 50.0°, preferably 40.0 to 45.0°, more preferably 40.0 to 42.5°.

Some polyethylenes also have a strain hardening ratio of 1.0 to 10.0 at 10 sec$^{-1}$. The upper limit on the range of the strain hardening ratio maybe 9.0, 8.0, 7.0, 6.0, 5.0, 4.0, 3.0, or 2.0. The lower limit on the range of the strain hardening ratio may be 2.0, 3.0, 4.0, 5.0, 6.0, 7.0, 8.0, or 9.0. Any combination lower and upper limits should be considered to be disclosed by the above limits on the strain hardening ratio, *e.g.,* 2.0 to 9.0, 3.0 to 7.0, 1.0 to 4.0, 3.0 to 4.0 etc. "Strain Hardening Ratio" is defined as the ratio of two extensional viscosities: the numerator measured using an extensional viscometer reporting the maximum viscosity (at break), and the denominator being an extensional viscosity calculated from small amplitude strain experimental data using the method of Baumgaertel and Winter. The extensional viscosities are measured using the same experimental conditions (*i.e.,* temperature, stabilization, etc.) as described in U.S. Patent No. 6,225,432.

The ethylene-based polymers also have a Composition Distribution Breadth Index (CDBI) of at least 70%, preferably ≥ 80.0%, preferably ≥ 85.0%, preferably ≥ 90.0%. CDBI is generally the weight percent of the ethylene-based polymer having a comonomer content within ±25% of the median comonomer content. The CDBI of a copolymer is readily determined utilizing well known techniques for isolating individual fractions of a sample of the copolymer. One such technique is Temperature Rising Elution Fractionation (TREF), as described in Wild, et al., J. Poly. Sci. Poly. Phys. Ed., vol. 20, p. 441 (1982).

To determine CDBI, a solubility distribution curve is first generated for the copolymer. This may be accomplished using data acquired from TREF techniques described above. This solubility distribution curve is a plot of the weight fraction of the copolymer that is solubilized as a function of temperature. This is converted to a weight fraction versus composition distribution curve. For the purpose of simplifying the correlation of composition with elution temperature the weight fractions less than 15,000 are ignored. These low weight fractions generally represent a trivial portion of the plastomer of the present invention. The remainder of this description and the appended claims maintain the convention of ignoring weight fractions below 15,000 in the CDBI measurements. For further details regarding the determination of CDBI of a copolymer which are known to those skilled in the art, see, for example, PCT Patent Application WO 93/03093, published Feb. 18, 1993.

The ethylene-based polymers preferably have a melt index, $I_{2.16}$, of 0.05 to 0.35 g/10 min., particularly 0.08 to 0.35 g/10 min., or 0.10 to 0.30 g/10 min., more particularly 0.15 to 0.35 g/10 min., as determined in accordance with ASTM D-1238 under a load of 2.16 kg and at a temperature of 190°C. Some ethylene-based polymers also have a high-load melt index, $I_{21.6}$, of 5.0 to 20.0 g/10 min., particularly 7.0 to 15.0 g/10 min., more particularly 9.0 to 12.0 g/10 min., as determined in accordance with ASTM D-1238 under a load of 21.6 kg and at a temperature of 190°C. The melt index ratio ($I_{21.6}/I_{2.16}$) of the ethylene-based polymers has a lower limit of 15.0 and an upper limit of 400.0. The lower limit on the melt index ratio may be 20.0, 30.0, 40.0, 50.0, 55.0, 60.0, 65.0, or 70.0. The upper limit on the melt index ratio may be 300.0, 200.0 100.0, 95.0, 90.0, 80.0, 75.0, or 70.0. Any combination of lower and upper limits should be considered to be disclosed by the above limits on the melt index ratio, *e.g.,* 15.0 to 400.0, 40.0 to 200.0, 50.0 to 100.0, 60.0 to 80.0, etc.

Particular ethylene-based polymers have a density of from 0.935 to 0.955 g/cm$^3$; more particularly 0.935 to 0.945 g/cm$^3$, determined using chips cut from plaques compression molded in accordance with ASTM D-1928 Procedure C, aged in accordance with ASTM D-618 Procedure A, and measured as specified by ASTM D-1505.

Typically, although not necessarily, ethylene-based polymers have a molecular weight distribution (MWD, defined as $M_w/M_n$) of 2.5 to 5.5, preferably 4.0 to 5.0. The expression $M_w/M_n$ is the ratio of the weight average molecular weight ($M_w$) to the number average molecular weight ($M_n$). The weight average molecular weight is given by:

$$M_w = \frac{\sum_i n_i M_i^{\,2}}{\sum_i n_i M_i}$$

The number average molecular weight is given by:

$$M_n = \frac{\sum_i n_i M_i}{\sum_i n_i}$$

The z-average molecular weight is given by:

$$M_z = \frac{\sum_i n_i M_i^3}{\sum_i n_i M_i^2}$$

where $n_i$ in the foregoing equations is the number fraction of molecules of molecular weight $M_i$. Measurements of $M_w$, $M_z$, and $M_n$ are typically determined by Gel Permeation Chromatography as disclosed in Macromolecules, Vol. 34, No. 19, p. 6812 (2001).

Ethylene-based polymers may also be characterized by an averaged 1% secant modulus (M) of from 10,000 to 60,000 psi (pounds per square inch), and a relation between M and the dart drop impact strength in g/mil (DIS) complying with formula (A):

$$DIS \geq 0.8 * [100 + e^{(11.71 - 0.000268M + 2.183 \times 10^{-9} M^2)}], \qquad (A)$$

where "e" represents 2.7183, the base Napierian logarithm, M is the averaged modulus in psi, and DIS is the 26 inch dart impact strength. The DIS is preferably from 120 to 1000 g/mil, even more preferably, from 150 to 800 g/mil.

The relationship of the Dart Impact Strength to the averaged 1% secant modulus is thought to be an indicator of long-chain branching in the ethylene-based polymer. Thus, alternatively ethylene-based polymers of certain embodiments may be characterized as having long-chain branches. Long-chain branches for the purposes of this invention represent the branches formed by reincorporation of vinyl-terminated macromers, not the branches formed by incorporation of the comonomers. The number of carbon atoms on the long-chain branches ranges from a chain length of at least one carbon more than two carbons less than the total number of carbons in the comonomer to several thousands. For example, a long-chain branch of an ethylene/hexene ethylene-based polymer is at least five (5) carbons in length (*i.e.*, 6 carbons less 2 equals 4 carbons plus one equals a minimum branch length of five carbons for long-chain branches). Particular ethylene-based polymers have a 0.05 to 1.0, particularly 0.05 to 0.5, 0.1 to 0.4, or 0.2 to 0.3, long-chain branches per 1000 carbon atoms. Ethylene-based polymers having levels of long-chain branching greater than 1.0 long-chain branch per 1000 carbon atoms may have some beneficial properties, *e.g.,* improved processability, shear thinning, and/or delayed melt fracture, and/or improved melt strength.

Various methods are known for determining the presence of long-chain branches. For example, long-chain branching can be determined using $^{13}$C nuclear magnetic resonance (NMR) spectroscopy and to a limited extent, *e.g.,* for ethylene homopolymers and for certain copolymers, and it can be quantified using the method of Randall (Journal of Macromolecular Science, Rev. Macromol. Chem. Phys., C29 (2&3), pp. 285-297). Although conventional $^{13}$C NMR spectroscopy cannot determine the length of a long-chain branch in excess of about six carbon atoms, there are other known techniques useful for quantifying or determining the presence of long-chain branches in ethylene-based polymers, such as ethylene/1-octene interpolymers. For those ethylene-based polymers wherein the $^{13}$C resonances of the comonomer overlap completely with the $^{13}$C resonances of the long-chain branches, either the comonomer or the other monomers (such as ethylene) can be isotopically labeled so that the long-chain branches can be distinguished from the comonomer. For example, a copolymer of ethylene and 1-octene can be prepared using $^{13}$C-labeled ethylene. In this case, the resonances associated with macromer incorporation will be significantly enhanced in intensity and will show coupling to neighboring $^{13}$C carbons, whereas the octene resonances will be unenhanced.

Alternatively, the degree of long-chain branching in ethylene-based polymers may be quantified by determination of the branching index. The branching index g' is defined by the following equation:

$$g' = \left.\frac{IV_{Br}}{IV_{Lin}}\right|_{M_w}$$

where g' is the branching index, $IV_{Br}$ is the intrinsic viscosity of the branched ethylene-based polymer and $IV_{Lin}$ is the intrinsic viscosity of the corresponding linear ethylene-based polymer having the same weight average molecular weight and molecular weight distribution as the branched ethylene-based polymer and, in the case of copolymers and terpolymers, substantially the same relative molecular proportion or proportions of monomer units. For the purposes, the molecular weight and molecular weight distribution are considered "the same" if the respective values for the branched polymer and the corresponding linear polymer are within 10% of each other. Preferably, the molecular weights are the same and the MWD of the polymers are within 10% of each other. A method for determining intrinsic viscosity of polyethylene is described in Macromolecules, 2000, 33, pp. 7489-7499. Intrinsic viscosity may be determined by dissolving the linear and branched polymers in an appropriate solvent, *e.g.,* trichlorobenzene, typically measured at 135°C. Another method for measuring the intrinsic viscosity of a polymer is ASTM D-5225-98 - Standard Test Method for Measuring Solution Viscosity of Polymers with a Differential Viscometer.

The branching index, g', is inversely proportional to the amount of branching. Thus, lower values for g' indicate relatively higher amounts of branching. The amounts of short and long-chain branching each contribute to the branching index according to the formula: $g'=g'_{LCB} \times g'_{SCB}$. Thus, the branching index due to long-chain branching may be calculated from the experimentally determined value for g' as described by Scholte, et al., in J. App. Polymer Sci., 29, pp. 3763-3782 (1984).

While any suitable polymerization method (including solution or slurry polymerization methods) may be used, the ethylene-based polymers of the present invention may be readily obtained via a continuous gas phase polymerization using supported catalyst comprising an activated molecularly discrete catalyst in the substantial absence of an aluminum alkyl based scavenger (*e.g.,* triethylaluminum (TEAL), trimethylaluminum (TMAL), triisobutyl aluminum (TIBAL), tri-n-hexylaluminum (TNHAL), and the like).

Ethylene-based polymers of the invention can be made with zirconium transition metal metallocene-type catalyst systems. Non-limiting examples of metallocene catalysts and catalyst systems useful in practicing the present invention include those described in, U.S. Patent Nos. 5,466,649, 6,476,171, 6,225,426, and 7,951,873; and in the references cited therein. Particularly useful catalyst systems include supported dimethylsilyl bis(tetrahydroindenyl) zirconium dichloride.

Supported polymerization catalyst may be deposited on, bonded to, contacted with, or incorporated within, adsorbed or absorbed in, or on, a support or carrier. In another embodiment, the metallocene is introduced onto a support by slurrying a presupported activator in oil, a hydrocarbon such as pentane, solvent, or non-solvent, then adding the metallocene as a solid while stirring. The metallocene may be finely divided solids. Although the metallocene is typically of very low solubility in the diluting medium, it is found to distribute onto the support and be active for polymerization. Very low solubilizing media such as mineral oil (*e.g.,* Kaydo™ or Drakol™) or pentane may be used. The diluent can be filtered off and the remaining solid shows polymerization capability much as would be expected if the catalyst had been prepared by traditional methods such as contacting the catalyst with methylalumoxane in toluene, contacting with the support, followed by removal of the solvent. If the diluent is volatile, such as pentane, it may be removed under vacuum or by nitrogen purge to afford an active catalyst. The mixing time may be greater than 4 hours, but shorter times are suitable.

Typically in a gas phase polymerization process, a continuous cycle is employed where in one part of the cycle of a reactor, a cycling gas stream, otherwise known as a recycle stream or fluidizing medium, is heated in the reactor by the heat of polymerization. This heat is removed in another part of the cycle by a cooling system external to the reactor. (See for example U.S. Patent Nos. 4,543,399, 4,588,790, 5,028,670, 5,317,036, 5,352,749, 5,405,922, 5,436,304, 5,453,471, 5,462,999, 5,616,661, and 5,668,228.)

Generally, in a gas fluidized bed process for producing polymers, a gaseous stream containing one or more monomers is continuously cycled through a fluidized bed in the presence of a catalyst under reactive conditions. The gaseous stream is withdrawn from the fluidized bed and recycled back into the reactor. Simultaneously, polymer product is withdrawn from the reactor and fresh monomer is added to replace the polymerized monomer. The reactor pressure may vary from 100 psig (680 kPag)-500 psig (3448 kPag), or in the range of from 200 psig (1379 kPag)-400 psig (2759 kPag), or in the range of from 250 psig (1724 kPag)-350 psig (2414 kPag). The reactor operated at a temperature in the range of 60°C. to 120°C., 60°C. to 115°C., 70°C. to 110°C., 70°C. to 95°C., or 85°C. to 95°C. The productivity of the catalyst or catalyst system is influenced by the main monomer partial pressure. The mole percent of the main monomer, ethylene, is from 25.0-90.0 mole percent, or 50.0-90.0 mole percent, or 70.0-85.0 mole percent, and the monomer partial pressure is in the range of from 75 psia (517 kPa)-300 psia (2069 kPa), or 100-275 psia (689-1894 kPa), or 150-265 psia (1034-1826 kPa), or 200-250 psia (1378-1722 kPa), which are typical conditions in a gas phase polymerization process.

Other gas phase processes contemplated by the process described herein include those described in U.S. Patent Nos. 5,627,242, 5,665,818 and 5,677,375, and European published patent applications EP-A-0 794 200, EP-A-0 802 202 and EP-B-634 421.

It may be beneficial in slurry or gas phase processes, to operate in the substantial absence of or essentially free of any scavengers, such as triethylaluminum, trimethylaluminum, triisobutylaluminum, and tri-n-hexylaluminum and diethyl aluminum chloride and the like. Such processes are described in PCT Publication WO 96/08520.

Additionally, the use of a process continuity aid, while not required, may be desirable in any of the foregoing processes. Such continuity aids are well known to persons of skill in the art and include, for example, metal stearates.

Ethylene-based polymers described herein can be blended with another polymer components, particularly other alpha-olefin polymers such as polypropylene and/or polyethylene homopolymer and copolymer compositions (e.g., LLDPE, HDPE, MDPE, LDPE, and other differentiated polyethylenes). The ethylene-based polymer may be present in such blends in an amount of from 0.1 to 99.9 wt.%. The upper limit on the amount of ethylene-based polymer in such blends may be 99.5 wt.%, 99.0 wt.%, 98.0 wt.%, 97.0 wt.%, 96.0 wt.%, 95.0 wt.%, 90.0 wt.%, 85.0 wt.%, 80.0 wt.%, 75.0 wt.%, 70.0 wt.%, 60.0 wt.%, 50.0 wt.%, 40.0 wt.%, 30.0 wt.%, 25.0 wt.%, 20.0 wt.%, 15.0 wt.%, 10.0 wt.%, 5.0 wt.%, 4.0 wt.%, 3.0 wt.%, 2.0 wt.%, 1.0 wt.%, or 0.5 wt.%. The lower limit on the amount of ethylene-based polymer in such blends may be 99.5 wt.%, 99.0 wt.%, 98.0 wt.%, 97.0 wt.%, 96.0 wt.%, 95.0 wt.%, 90.0 wt.%, 85.0 wt.%, 80.0 wt.%, 75.0 wt.%, 70.0 wt.%, 60.0 wt.%, 50.0 wt.%, 40.0 wt.%, 30.0 wt.%, 25.0 wt.%, 20.0 wt.%, 15.0 wt.%, 10.0 wt.%, 5.0 wt.%, 4.0 wt.%, 3.0 wt.%, 2.0 wt.%, 1.0 wt.%, or 0.5 wt.%. Blend compositions including any upper and lower limit of ethylene-based polymer are envisioned (e.g., 0.5 to 99.5 wt.%, 10.0 to 90.0 wt.%, 20.0 to 80.0 wt.%, 25.0 to 75.0 wt.%, 40.0 to 60.0 wt.%, 45.0 to 55.0 wt.%, 5.0 to 50.0 wt.%, 10.0 to 40.0 wt.%, 20.0 to 30.0 wt.%, 50.0 to 95.0 wt.%, 60.0 to 90.0 wt.%, 70.0 to 80.0 wt.%, 1.0 to 15.0 wt.%, 1.0 to 10.0 wt.%, 1.0 to 5.0 wt.%, 85.0 to 99.0 wt.%, 90 to 99.0 wt.%, or 95.0 to 99.0 wt.%). The amount of ethylene-based polymer is based on the total weight of the polymer blend.

In certain embodiments, the ethylene-based polymer may be blended with one or more propylene-based polymers (e.g., homopolymer, copolymer, or impact copolymer including > 50.0 mol % of polymer units derived from propylene). In addition to blends having the compositional limits described above, particularly useful polypropylene-containing blends comprise less than 50.0 wt.% (e.g. 2.0 to 49.5 wt.%, 5.0 to 45.0 wt.%, 7.5 to 42.5 wt.% 10.0 to 40.0 wt. 20.0 to 30.0 wt.%, 25.0 to 49.5 wt.% 30.0 to 49.5 wt.%, 35.0 to 45.0 wt.%) propylene-based polymer. Some useful propylene-based polymers include those having one or more of the following properties:

1) propylene content of at least 85 wt.% (preferably at least 90 wt.%, preferably at least 95 wt.%, preferably at least 97 wt.%, preferably 100 wt.%); and/or
2) $M_w$ of 30 to 2,000 kg/mol (preferably 50 to 1,000 kg/mol, preferably 90 to 500 kg/mol); and/or
3) $M_w/M_n$ of 1 to 40 (preferably 1.4 to 20, preferably 1.6 to 10, preferably 1.8 to 3.5, preferably 1.8 to 2.5); and/or
4) branching index (g') of 0.2 to 2.0 (preferably 0.5 to 1.5, preferably 0.7 to 1.3, preferably 0.9 to 1.1); and/or
5) melt flow rate (MFR) of 1 to 300 dg/min (preferably 5 to 150 dg/min, preferably 10 to 100 dg/min, preferably 20 to 60 dg/min); and/or
6) melting point ($T_m$, peak second melt) of at least 100°C (preferably at least 110°C, preferably at least 120°C., preferably at least 130°C., preferably at least 140°C., preferably at least 150°C., preferably at least 160°C., preferably at least 165°C.); and/or
7) crystallization temperature ($T_c$, peak) of at least 70°C (preferably at least 90°C, preferably at least 110°C, preferably at least 130°C); and/or
8) heat of fusion ($H_f$) of 40 to 160 J/g (preferably 50 to 140 J/g, preferably 60 to 120 J/g, preferably 80 to 100 J/g); and/or
9) crystallinity of 5 to 80% (preferably 10 to 75%, preferably 20 to 70%, preferably 30 to 65%, preferably 40 to 60%); and/or
10) propylene meso diads of 90% or more (preferably 92% or more, preferably 94% or more, preferably 96% or more); and/or
11) heat deflection temperature (HDT) of 45 to 140°C (preferably 60 to 135°C, preferably 75 to 125°C); and/or
12) Gardner impact strength at 23°C. of 30 to 1300 J (preferably 40 to 800 J, preferably 50 to 600 J); and/or
13) flexural modulus of 300 to 3000 MPa (preferably 600 to 2500 MPa, preferably 800 to 2000 MPa, preferably 1000 to 1500 MPa).

In a preferred embodiment, the propylene polymer is selected from polypropylene homopolymer, polypropylene copolymers, and blends thereof. The homopolymer may be atactic polypropylene, isotactic polypropylene, highly isotactic polypropylene, syndiotactic polypropylene, and blends thereof. The copolymer can be a random copolymer, a statistical copolymer, a block copolymer, and blends thereof.

The method of making the polypropylene is not critical, as it can be made by slurry, solution, gas-phase, high-pressure, or other suitable processes, through the use of catalyst systems appropriate for the polymerization of polyolefins, such as Ziegler-Natta-type catalysts, metallocene-type catalysts, other appropriate catalyst systems or combinations thereof. In a preferred embodiment the propylene polymers are made by the catalysts, activators and processes described in U.S. Patent Nos. 5,741,563, 6,342,566, 6,384,142, and PCT Publication Nos. WO 03/040201 and WO 97/19991. Such catalysts are well known in the art, and are described in, for example, ZIEGLER CATALYSTS (Gerhard Fink, Rolf Mülhaupt and Hans H. Brintzinger, eds., Springer-Verlag 1995); Resconi et al., Selectivity in Propene Polymerization with Metallocene Catalysts, 100 CHEM. REV., pp. 1253-1345 (2000); and I, II METALLOCENE-BASED POLYOLEFINS (Wiley & Sons, 2000).

Polypropylene homopolymers or copolymers useful in the present invention may have some level of isotacticity or syndiotacticity. In one embodiment, the polypropylene is isotactic polypropylene, and in another embodiment, the polypropylene is highly isotactic polypropylene. In a desirable embodiment, the polypropylene is a polypropylene homopolymer having at least 85% (preferably at least 90%) isotactic pentads. In another desirable embodiment, the polypropylene is a polypropylene homopolymer having at least 85% (preferably at least 90%) syndiotactic pentads.

In a particularly preferred embodiment, the propylene polymers useful herein are produced by a metallocene catalyst system, and have a $M_w/M_n$ of 1.5 to 3 (preferably 1.8 to 2.5) and a CDBI of 80 wt.% or more (preferably 90 wt.% or more).

In another embodiment the propylene polymer is a random copolymer, also known as an "RCP," comprising propylene and up to 20 mole % of ethylene or a $C_4$ to $C_{20}$ olefin, preferably up to 20 mole % ethylene, preferably from 1 to 10 mole % ethylene.

The blends may be formed using conventional equipment and methods, such as by dry blending the individual components and subsequently melt mixing in a mixer, or by mixing the components together directly in a mixer, such as, for example, a Banbury mixer, a Haake mixer, a Brabender internal mixer, or a single or twin-screw extruder, which may include a compounding extruder and a side-arm extruder used directly downstream of a polymerization process. Additionally, additives may be included in the blend, in one or more components of the blend, and/or in a product formed from the blend, such as a film, as desired. Such additives are well known in the art, and can include, for example: fillers; antioxidants (*e.g.,* hindered phenolics such as IRGANOX™ 1010 or IRGANOX™ 1076 available from Ciba-Geigy); phosphites (*e.g.,* IRGAFOS™ 168 available from Ciba-Geigy); anti-cling additives; tackifiers, such as polybutenes, terpene resins, aliphatic and aromatic hydrocarbon resins, alkali metal and glycerol stearates and hydrogenated rosins; UV stabilizers; heat stabilizers; antiblocking agents; release agents; anti-static agents; pigments; colorants; dyes; waxes; silica; fillers; talc and the like.

Ethylene-based polymer and blends thereof may be used in a variety of end-use applications. Films comprising ethylene-based polymers are particularly useful. Such films include, for example, monolayer and multilayer blown, extruded, and/or cast stretch and/or shrink films. Film applications improved by higher melt strength, *e.g.,* thick film and geomembrane applications, may be particularly benefitted. Films including the ethylene-based polymer are also useful as cling film, sealing films, oriented films, snack packaging, heavy duty bags, grocery sacks, baked and frozen food packaging, medical packaging, industrial liners, membranes, etc., in food-contact and non-food contact applications.

The total thickness of monolayer and multilayer films may vary based upon the application desired. A total film thickness of 5-100 μm, more typically 10-50 μm, is suitable for most applications. In some applications, particularly geomembrane applications, the films may have a thickness of 100 μm to 5.0 mm, particularly 1.0 to 5.0 mm, or 2.0 to 4.0 mm. Those skilled in the art will appreciate that the thickness of individual layers for multilayer films may be adjusted based on desired end-use performance, resin or copolymer employed, equipment capability, and other factors. The materials forming each layer may be coextruded through a coextrusion feedblock and die assembly to yield a film with two or more layers adhered together but differing in composition. Coextrusion can be adapted for use in both cast film or blown film processes.

Particular embodiments of the invention related to monolayer films comprising an ethylene-based polymer according to the invention. When used in multilayer films, the ethylene-based polymer may be used in any layer of the film, or in more than one layer of the film, as desired. When more than one layer of the film comprises an ethylene-based polymer, each such layer can be individually formulated; *i.e.,* the layers comprising the ethylene-based polymer can be the same or different chemical composition, density, melt index, thickness, etc., depending upon the desired properties of the film.

To facilitate discussion of different film structures, the following notation is used herein. Each layer of a film is denoted "A" or "B", where "A" indicates a conventional film layer as defined below, and "B" indicates a film layer comprising an ethylene-based polymer (or blend including an ethylene-based polymer). Where a film includes more than one A layer or more than one B layer, one or more prime symbols (', ", "', etc.) are appended to the A or B symbol to indicate layers of the same type (conventional or inventive) that can be the same or can differ in one or more properties, such as chemical composition, density, melt index, thickness, etc. Finally, the symbols for adjacent layers are separated by a slash (/). Using this notation, a three-layer film having an inner layer of a LLDPE polymer blend disposed between two outer, conventional film layers would be denoted A/B/A'. Similarly, a five-layer film of alternating conventional/inventive layers would be denoted A/B/A'/B'/A". Unless otherwise indicated, the left-to-right or right-to-left order of layers does not matter, nor does the order of prime symbols; *e.g.,* an A/B film is equivalent to a B/A film, and an A/A'/B/A" film is equivalent to an A/B/A'/A" film. The relative thickness of each film layer is similarly denoted, with the thickness of each layer relative to a total film thickness of 100 (dimensionless) indicated numerically and separated by slashes; *e.g.,* the relative thickness of an A/B/A' film having A and A' layers of 10 μm each and a B layer of 30 μm is denoted as 20/60/20.

For the various films described herein, the "A" layer can comprise any material known in the art for use in multilayer films or in film-coated products. Thus, for example, each A layer can be formed of a polyethylene homopolymer or copolymer, and the polyethylene can be, for example, a VLDPE, a LDPE, a LLDPE, a MDPE, a HDPE, or a DPE, as well as other polyethylenes known in the art. The polyethylene can be produced bv any suitable process, including metallocene-catalyzed processes and Ziegler-Natta catalyzed processes. Further, each A layer can be a blend of two or more such polyethylenes and can include additives known in the art. Further, one skilled in the art will understand that the layers of a multilayer film must have the appropriate viscosity match. Examples of suitable A layers are described in US2008/0038533, filed April 24, 2007.

The "B" layer comprises an ethylene-based polymer or blend thereof, and can be any of such blends described herein. In some embodiments, the B layer consists essentially of an ethylene-based polymer. In other embodiments, the B layer consists essentially of two or more ethylene-based polymers. In still other embodiments, the B layer comprises (a) from 0.1 to 99.9 wt.%, 10.0 to 90.0 wt.%, 20.0 to 80.0 wt.%, 30.0 to 70.0 wt.%, 40.0 to 60.0 wt.%, or 45.0 to 55.0 wt.% of an ethylene-based polymer as described herein; and (b) from 99.9 to 0.1 wt.%, 90.0 to 10.0 wt.%, 80.0 to 20.0 wt.%, 70.0 to 30.0 wt.%, 60.0 to 40.0 wt.%, or 55.0 to 45.0 wt.%, of a polymer selected from the group consisting of very low density polyethylene, medium density polyethylene, differentiated polyethylene, and combinations thereof, wherein the wt.% values are based on the total weight of the film.

In certain embodiments, particularly those related to sheeting applications where a balance of high gloss and high scratch resistance is desired, the multilayer film has a structure where at least one outer layer of the film is a B layer, *e.g.,* B/A/A', B/A/B, B/A/B' etc. The thickness of each layer of the film, and of the overall film, is not particularly limited, but is determined according to the desired properties of the film. Typical film layers have a thickness of from 1 to 1000 $\mu$m, more typically from 5 to 100 $\mu$m, and typical films have an overall thickness of from 10 to 100 $\mu$m.

Some films including ethylene-based polymers of the invention are characterized by unique properties. For example, some films comprising ethylene-based polymers have one or more of the following gloss values: a 20° Gloss of 5.0 to 15.0, preferably 7.5 to 15.0; a 60° Gloss of 30.0 to 60.0, preferably 40.0 to 60.0; and/or an 80° Gloss of 60.0 to 80.0, preferably 70.0 to 80.0. Gloss, a dimensionless number, is measured as specified by ASTM D-2457 at the reported angles.

Some multilayer films have a particular combination of tear resistance and shrink properties. For example, a multilayer film comprising opposing outer layers A in surface contact with a core layer comprising an ethylene-based polymer has a TD shrink of 20.0 to 70.0%. Some such films have an Elmendorf Tear of 0.5 to 10.0 g/$\mu$m. In particular such embodiments, the outer layers A comprise an ethylene copolymer having at least 50 wt.% ethylene-derived units and up to 50 wt.%, preferably 1 wt.% to 35 wt.%, even more preferably 1 wt.% to 6 wt.% of a $C_3$ to $C_{20}$ comonomer (preferably hexene or octene), based upon the weight of the copolymer. The polyethylene copolymers preferably have a composition distribution breadth index (CDBI) of 60% or more, preferably 60% to 80%, preferably 65% to 80%. In another preferred embodiment, the ethylene copolymer has a density of 0.910 to 0.950 g/$cm^3$ (preferably 0.915 to 0.930 g/$cm^3$, preferably 0.915 to 0.923 g/$cm^3$), a CDBI of 60% to 80%, preferably between 65% and 80%, and a melt index, $I_{2.16}$ of 0.5 to 5.0 g/10 min. Preferably these polymers are metallocene polyethylenes (mPEs). Such ethylene copolymers are available from ExxonMobil Chemical Company under the tradename Exceed™ mPEs. Other outer layers A comprise an mPE having at least some amount of long-chain branching; a CBDI $\geq$ 70.0, a density of 0.910 to 0.950 g/$cm^3$ (preferably 0.915 to 0.940 g/$cm^3$, preferably 0.918 to 0.923 g/$cm^3$), a melt index of 0.1 to 3.0 g/min. Some such mPEs are available from ExxonMobil Chemical Company under the tradename Enable™ mPE resins.

Such films may be formed by any number of well-known extrusion or coextrusion techniques discussed below. Films may be unoriented, uniaxially oriented or biaxially oriented. Physical properties of the film may vary depending on the film forming techniques used.

One technique for making film structures described above, and for which the ethylene-based polymers are particularly suitable, is a high-stalk blown film processes. One such process comprises 1) providing an ethylene-based polymer described above and 2) extruding the ethylene-based polymer through an annular die to form an extruded tube of molten material. The tube has a tube diameter that is substantially the annular die diameter. However, while continuously extruding the tube, the tube of molten material expands downstream of said annular die to form a bubble. The bubble diameter may then exceed (i) the annular die diameter and (ii) the tube diameter. The bubble has a frost line which comprises a demarcation line between said molten material and solid biaxially oriented film. The frost line is located on the bubble at a height of least 5.0, preferably 10.0, preferably 20.0 times the die diameter. The ethylene-based polymers are particularly suitable in such processes, having a neck-height-ratio (neckheight/die diameter) from 2.0 to 12.0, preferably from 4.0 to 12.0, more preferably 6.0 to 12.0 and/or a blow-up-ratio (BUR, bubble diameter/die diameter) from 2.0 to 8.0, preferably 3.0 to 8.0, more preferably, 4.0 to 8.0, more preferably still 6.0 to 8.0.

In other words, high-stalk blown film processes may benefit from ethylene-based polymers comprising 80.0 to 99.0 wt.% of polymer units derived from ethylene and 1.0 to 20.0 wt.% of polymer units derived from one or more $C_3$ to

$C_{20}$ $\alpha$-olefin comonomers where such polymers have a complex modulus, $G^*_{60}$, $< 2.50 \times 10^3$ Pa, preferably $< 2.00 \times 10^3$

Pa. Preferably the ethylene-based polymer has a complex modulus, $G_{50}^*$, $< 50.00 \times 10^3$ Pa, preferably $< 25.00 \times 10^3$ Pa, preferably $< 20.00 \times 10^3$ Pa, preferably $< 10.00 \times 10^3$ Pa, preferably $< 5.00 \times 10^3$ Pa. The ethylene-based polymer, has a CDBI $\geq 70.0\%$, preferably $\geq 80.0\%$, preferably $\geq 85.0\%$, preferably $\geq 90.0\%$; a melt index, $I_{2.16}$, of 0.05 to .35 g/10 min., preferably 0.08 to 0.35 g/10 min., more preferably 0.10 to 0.30 g/10 min.; a density of from 0.935 to 0.950 g/cm$^3$; preferably 0.935 to 0.945 g/cm$^3$ and a MWD of 2.5 to 5.5, preferably 4.0 to 5.0.

In another aspect, the ethylene-based polymers described herein may be suitable for methods of making pipe for transmission or distribution of water and gases. In other words, the method of making the pipe includes selecting an ethylene-based polymer described herein to make a pipe by any known methods, some of which are described in U.S. Patent Nos. 6,204,349; 6,191,227; 5,908,679; 5,683,767; 5,417,561; and 5,290,498.

## Particular Embodiments

(deleted)

*Embodiment A.* An ethylene-based polymer comprising 80.0 to 99.0 wt.% of polymer units derived from ethylene and 1.0 to 20.0 wt.% of polymer units derived from one or more C$_3$ to C$_{20}$ α-olefin comonomers; the ethylene-based polymer having a CDBI $\geq 70.0\%$, preferably $\geq 80.0\%$, preferably $\geq 85.0\%$, preferably $\geq 90.0\%$; a melt index, $I_{2.16}$, of 0.05 to 0.35 g/10 min.; a density of from 0.935 to 0.950 g/cm$^3$; and a MWD of 2.5 to 5.5, preferably 4.0 to 5.0, preferably having a complex modulus, $G_{60}^*$, $< 2.50 \times 10^3$ Pa, preferably $< 2.00 \times 10^3$ Pa.

*Embodiment B.* The ethylene-based polymer of any of Embodiment A, wherein the ethylene-based polymer has a density of 0.935 to 0.945 g/cm$^3$.

*Embodiment C.* The ethylene-based polymer of any of Embodiments A to B, wherein the ethylene-based polymer has a melt index, $I_{2.16}$, of 0.08 to 0.35 g/10 min., preferably 0.10 to 0.30 g/10 min.

*Embodiment D.* The ethylene-based polymer of any of Embodiments A to C, wherein the ethylene-based polymer has a 20° Gloss of 5.0 to 15.0.

*Embodiment E.* The ethylene-based polymer of any of Embodiments A to D, wherein the ethylene-based polymer has a 60° Gloss of 30.0 to 60.0.

*Embodiment F.* The ethylene-based polymer of any of Embodiments A to E, wherein the ethylene-based polymer has an 80° Gloss of 60.0 to 80.0.

*Embodiment G.* The ethylene-based polymer of any of Embodiments A to F having a complex modulus, $G_{50}^*$, $< 50.00 \times 10^3$ Pa, preferably $< 25.00 \times 10^3$ Pa, preferably $< 20.00 \times 10^3$ Pa, preferably $< 10.00 \times 10^3$ Pa, preferably $< 5.00 \times 10^3$ Pa.

*Embodiment H.* The ethylene-based polymer of any of Embodiments A to G, wherein the local maximum loss angle is from 40.0 to 50.0°, preferably, 40.0 to 45.0°, more preferably 42.5 to 45.0°.

*Embodiment I.* The ethylene-based polymer of any of Embodiments A to H, wherein the local minimum loss angle is from 40.0 to 50.0°, preferably, 40.0 to 45.0°, more preferably 40.0 to 42.5°.

*Embodiment J.* The ethylene-based polymer of any of Embodiments A to I, comprising 1.0 to 5.0 wt.%, particularly 1.0 to 3.0 wt.% of polymer units derived from one or more C$_3$ to C$_{20}$ α-olefin comonomers, preferably C$_3$ to C$_{10}$ α-olefins, and more preferably C$_4$ to C$_8$ α-olefins, most preferably hexene-1.

Embodiment K. An article of manufacture comprising an ethylene-based polymer according to any of Embodiments A to J, wherein said article is formed by a manufacturing process selected from the group consisting of injection molding, blow molding, extrusion coating, foaming, casting, and combinations thereof.

*Embodiment L.* An article of manufacture comprising an ethylene-based polymer according to any of Embodiments A to J, wherein said article comprises a thermoformed extruded sheet.

*Embodiment M.* An article of manufacture of Embodiment L wherein the thermoformed extruded sheet is a multilayer extruded sheet having a cap layer comprising the ethylene/alpha-olefin of any of Embodiments A to J.

*Embodiment N.* An article of manufacture of Embodiment K, wherein said article is an extruded monolayer film.

*Embodiment O.* An article of manufacture of Embodiment K, wherein said article is an extruded multilayer film.

*Embodiment P.* A multilayer film comprising an outer layer A in surface contact with a first surface of a core layer comprising an ethylene-based polymer according to any of Embodiments A to J, a second surface of the core layer in surface contact with a layer B, wherein the multilayer film has a TD shrink of 20.0 to 70.0%.

*Embodiment Q.* The multilayer film of Embodiment P having a MD Elmendorf Tear of 0.5 to 10.0 g/μm.

*Embodiment R.* The multilayer film of Embodiment P or Q, wherein the ethylene-based polymer has 0.05 to 0.5 long-chain branches per/1000C atoms.

*Embodiment S.* A polymer blend composition comprising 1) 0.1 to 99.9 wt.% of an ethylene-based polymer according to any of Embodiments A to J; and 2) 0.1 to 99.9 wt.% of a polymer selected from the group consisting of high density polyethylene, linear low density polyethylene, low density polyethylene, medium density polyethylene, differentiated polyethylene and combinations thereof. Blends including polypropylene homopolymers and copolymers, including impact copolymers, and combinations thereof are also particularly useful in some applications.

**Examples**

*Test Methods*

The properties described herein can be determined in accordance with the following test procedures. Where any of these properties is referenced in the appended claims, it is to be measured in accordance with the specified test procedure.

Where applicable, the properties and descriptions below are intended to encompass measurements in both the machine and transverse directions. Such measurements are reported separately with the designation "MD" indicating a measurement in the machine direction and "TD" indicating a measurement in the transverse direction.

*Gauge,* reported in $\mu$m, is measured using a Measuretech Series 200 instrument. The instrument measures film thickness using a capacitance gauge. For each film sample, ten film thickness datapoints are measured per inch of film as the film is passed through the gauge in a transverse direction. From these measurements, an average gauge measurement is determined and reported.

*Elmendorf Tear,* reported in grams (g) or grams per $\mu$m (g/$\mu$m), is measured as specified by ASTM D-1922.

*Haze,* reported as a percentage (%), is measured as specified by ASTM D-1003.

Dart Drop Impact or Dart Drop Impact Strength (DIS), reported in grams (g) and/or grams per $\mu$m (g/$\mu$m), is measured as specified by ASTM D-1709, method A.

*Peak Puncture Force,* reported in pounds (lb) and/or pounds per $\mu$m (lb/mil), is determined according to ASTM D-3763.

*Shrink,* reported as a percentage, is measured by cutting circular specimens from a film using a 100 mm die. The samples were marked in their respective directions, dusted with talc, and placed on a pre-heated, talc covered tile. The samples were then heated using a heat gun (model HG-501A) for approximately 10 to 45 seconds, or until the dimensional change ceased. An average of three specimens is reported. A negative shrinkage number indicates expansion of a dimension after heating when compared to its pre-heating dimension.

Where any of the above properties are reported in pounds per square inch, grams per $\mu$m, or in any other dimensions that are reported per unit area or per unit thickness, the ASTM methods cited for each property have been followed except that the film gauge is measured in accordance with ASTM D-374, Method C.

*Polymer Examples*

Inventive LLDPE resins were prepared using the metallocene catalysts and gas phase processes described above. In particular, preparation of the inventive LLDPEs used in the following examples was substantially as described in the examples set forth in U.S. Patent No. 6,476,171. Process conditions were manipulated as needed to achieve resins having the resulting density and melt index measurements identified below.

Example 1: Ethylene is polymerized with 1-hexene using the metallocene catalysts and gas phase processes substantially as described in the examples set forth in U.S. Patent No. 6,476,171. Process conditions are manipulated to a polymer having a having a CBDI $\geq$ 70.0, a density of 0.940 g/cm$^3$, a melt index (I$_{2.16}$) of 0.15 g/10 min., a melt index ratio (I$_{21.6}$/I$_{2.16}$) of 70.0.

Example 2 (Ex. 2 CE1): A metallocene-catalyzed ethylene-hexene copolymer having a CDBI > 60%, a density of 0.918 g/cm$^3$, and a melt index (I$_{2.16}$) of 1.0 g/10 min., available from ExxonMobil Chemical Company as Exceed™ 1018.

Example 3 (Ex. 3 CE2): A high molecular weight ethylene copolymer having a density of 0.949 g/cm$^3$, a melt index (I$_{2.16}$) of 0.10 g/10 min., and a high load melt index (I$_{21.6}$) of 10 g/10 min., available from ExxonMobil Chemical Company as Paxon™ BA 50-100.

Example 4 (Ex. 4 CE3): A low density polyethylene with a density of 0.924 g/cm$^3$ and a melt index (I$_{2.16}$) of 0.7 g/10 min., available from ExxonMobil Chemical Company as LD 071.

Example 5 (CE4): A metallocene-catalyzed, long-chain branched, ethylene/1-hexene copolymer having a CBDI $\geq$ 70.0, a density 0.920 g/cm$^3$, a melt index of 1.0 g/10 min., and a melt index ratio (I$_{21.6}$/I$_{2.16}$) of 34, available from ExxonMobil Chemical Company as Enable™ 20-10.

Example 6 (CE5): A metallocene-catalyzed, long-chain branched, ethylene/1-hexene copolymer having a CBDI $\geq$ 70.0, a density 0.935 g/cm$^3$, a melt index of 0.5 g/10 min., and a melt index ratio (I$_{21.6}$/I$_{2.16}$) of 49, available from ExxonMobil Chemical Company as Enable™ 35-05.

Example 7 (CE6): A metallocene-catalyzed, long-chain branched, ethylene/1-hexene copolymer having a CBDI ≥ 70.0, a density 0.920 g/cm$^3$, a melt index of 0.5 g/10 min., a melt index ratio ($I_{21.6}$/$I_{2.16}$) of 38, and available from ExxonMobil Chemical Company as Enable™ 20-05 (CE6).

Example 8 (CE7): A metallocene-catalyzed, long-chain branched, ethylene/1-hexene copolymer having a CBDI ≥ 70.0, a density 0.927 g/cm$^3$, a melt index of 0.5 g/10 min., available from ExxonMobil Chemical Company as Enable™ 27-05.

Example 9 (CE8): An ethylene/1-octene plastomer having a CDBI > 90%, a density of 0.902 g/cm$^3$, a melt index of 1.1 g/10 min., and available from ExxonMobil Chemical Company as Exact™ 0201.

Example 10 (CE9): An ethylene/1-hexene plastomer having a CDBI > 90%, a density of 0.86 to 0.925 g/cm$^3$, a melt index of 1.2 g/10 min., and available from ExxonMobil Chemical Company as Exact™ 3132

Example 11 (CE10): A low density polyethylene homopolymer with a density of 0.923 g/cm$^3$ and a melt index ($I_{2.16}$) of 2.0 g/10 min., available from ExxonMobil Chemical Company as LD105.30.

Example 12 (CE11): A low density polyethylene with a density of 0.921 g/cm$^3$ and a melt index ($I_{2.16}$) of 4.2 g/10 min., available from ExxonMobil Chemical Company as LD201.48.

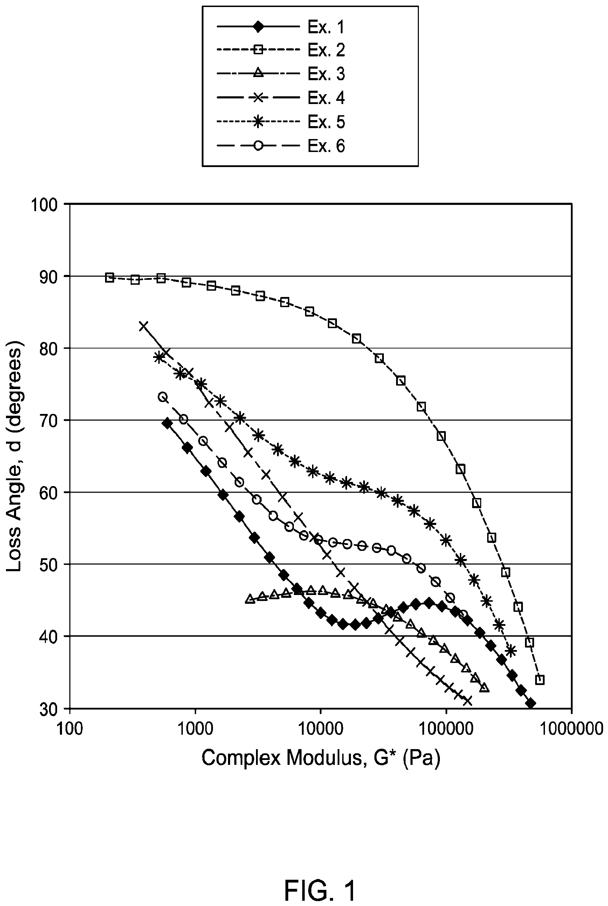

The rheological properties of Examples 1-6 are examined by the Van Gurp-Palmen treatment. As shown in Figure 1, the metallocene-catalyzed, ethylene-hexene copolymer of Example 2 has a complex modulus that is highest at high loss angles and decreases in a rapid, non-linear manner at lower loss angles. The ethylene copolymer of Example 3 displays similar behavior, albeit the values are shifted relative to those of Example 2. The Van Gurp-Palmen plot of the low density ethylene homopolymer of Example 4 show a much more linear decrease in the complex modulus as the loss angle decreases. While Examples 5 and 6 have Van Gurp-Palmen behavior that is different from the logarithmic-like decrease of Examples 2 and 3 and the more linear behavior of Example 4, as in those examples, higher loss angles of Examples 5 and 6 consistently relate to lower complex moduli over loss angles from 30 to 90.0°.

Example 1, on the other hand, displays a different behavior. In both high and low ends of the loss angle range, the complex modulus generally decreases. But in an intermediate region, the complex modulus increase to a maximum value before again decreasing. In other words, unlike the Van Gurp-Palmen plot of Examples 2-6, that of Example 1 displays at least one region where the slope is positive. The difference in the loss angle between the local maximum and the local minimum in Example 1 is 4°, but could be 5.0°, 7.0°, 10.0°, or 15.0° or more in other embodiments. The difference in the complex modulus values between the local maximum and the local minimum in Example 1 is 52,100 Pa, but it is envisioned that other inventive ethylene-based polymers could, depending on the branching structure of the polymer chains, have a difference that could be greater or less than that observed for Example 1. Van Gurp-Palmen data is collected in Table 1.

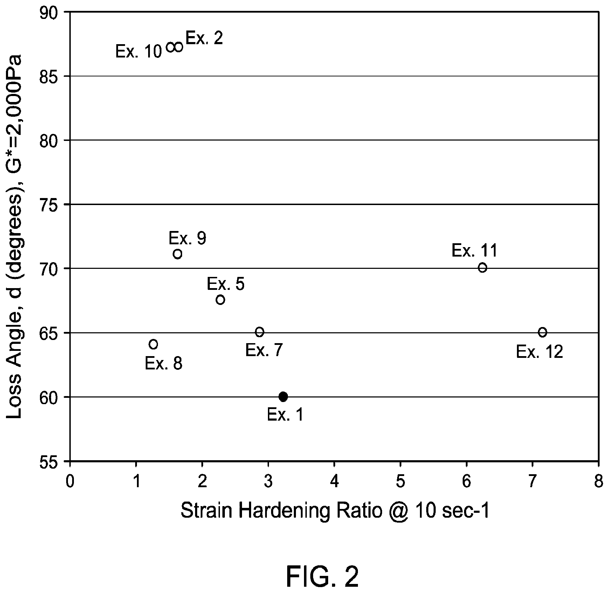

Figure 2 compares the tensile behavior for Example 1 to that of Examples 2, 5, and 7-12. In Figure 2, the strain hardening ratio is compared to the loss angle at a complex

**TABLE 1**

| Ex. 1 | | Ex. 2 | | Ex. 3 | | Ex. 4 | | Ex. 5 | | Ex. 6 | |
|---|---|---|---|---|---|---|---|---|---|---|---|
| G* | Loss angle | G* | Loss angle | G* | Loss angle | G* | Loss angle | G* | Loss angle | G* | Loss angle |
| (Pa) | (degree) | (Pa) | (degree) | (Pa) | (degree) | (Pa) | (degree) | (Pa) | (degree) | (Pa) | (degree) |
| 581 | 69.3 | 203 | 89.388 | 196657 | 33 | 377 | 82.723 | 500 | 78.4 | 133504.5 | 43.00601 |
| 848 | 66 | 325 | 89.18 | 164927 | 34.4 | 568 | 79.086 | 732 | 76.2 | 104190.7 | 45.30802 |
| 1,190 | 62.8 | 523 | 89.357 | 137928 | 35.8 | 870 | 76.276 | 1076 | 74.8 | 80633.06 | 47.48983 |
| 1,630 | 59.5 | 822 | 88.81 | 114021 | 37.1 | 1253 | 72.262 | 1535 | 72.4 | 61895.48 | 49.26137 |
| 2,200 | 56.5 | 1297 | 88.312 | 93690 | 38.4 | 1818 | 68.787 | 2203 | 70.1 | 47134.28 | 50.68518 |
| 2,920 | 53.6 | 2039 | 87.721 | 76567 | 39.6 | 2570 | 65.436 | 3126 | 67.7 | 35863.21 | 51.80931 |
| 3,820 | 50.9 | 3203 | 86.998 | 62183 | 40.7 | 3532 | 62.241 | 4380 | 65.8 | 27321.24 | 52.24386 |
| 4,920 | 48.5 | 5015 | 86.046 | 50210 | 41.8 | 4826 | 59.145 | 6070 | 64.2 | 20900.96 | 52.458 |
| 6,240 | 46.6 | 7824 | 84.791 | 40335 | 42.9 | 6414 | 56.384 | 8338 | 62.8 | 15944.27 | 52.67008 |
| 7,860 | 44.6 | 12128 | 83.153 | 32252 | 43.8 | 8502 | 53.645 | 11412 | 61.9 | 12210.02 | 52.88012 |
| 9,790 | 43.2 | 18631 | 81.018 | 25669 | 44.6 | 10989 | 51.272 | 15581 | 61.2 | 9376.929 | 53.29419 |
| 12,100 | 42.2 | 28275 | 78.377 | 20436 | 45.3 | 14106 | 48.853 | 21288 | 60.6 | 7154.369 | 53.90061 |
| 14,900 | 41.7 | 42280 | 75.232 | 16194 | 45.9 | 17949 | 46.739 | 29041 | 59.8 | 5430.654 | 55.06279 |
| 18,400 | 41.6 | 62022 | 71.582 | 12851 | 46.1 | 22527 | 44.735 | 39542 | 58.8 | 4078.259 | 56.68803 |
| 22,700 | 41.9 | 89081 | 67.496 | 10207 | 46.4 | 27953 | 42.761 | 53519 | 57.3 | 3025.574 | 58.81141 |
| 28,100 | 42.5 | 124872 | 63.06 | 8141 | 46.4 | 34370 | 41.039 | 71920 | 55.5 | 2216.456 | 61.24443 |
| 35,100 | 43.3 | 170425 | 58.402 | 6500 | 46.4 | 41959 | 39.408 | 95460 | 53.3 | 1599.312 | 63.91849 |
| 44,200 | 44 | 226494 | 53.625 | 5212 | 46.1 | 50899 | 37.841 | 125034 | 50.7 | 1129.815 | 66.80561 |
| 56,000 | 44.5 | 292689 | 48.832 | 4194 | 45.9 | 61273 | 36.466 | 161219 | 47.9 | 786.974 | 69.84961 |
| 71,100 | 44.6 | 367304 | 44.019 | 3373 | 45.6 | 73455 | 35.215 | 204496 | 44.9 | 537.4616 | 72.88453 |
| 90,300 | 44.2 | 450077 | 39.177 | 2715 | 45.3 | 87531 | 34.101 | 255704 | 41.6 |  | 75.83168 |
| 114,000 | 43.4 | 543478 | 33.944 |  |  | 103635 | 33.062 | 316697 | 38.1 |  |  |
| 144,000 | 42.2 |  |  |  |  | 122232 | 32.105 |  |  |  |  |

13

(continued)

| Ex. 1 | | Ex. 2 | | Ex. 3 | | Ex. 4 | | Ex. 5 | | Ex. 6 | |
|---|---|---|---|---|---|---|---|---|---|---|---|
| G* | Loss angle | G* | Loss angle | G* | Loss angle | G* | Loss angle | G* | Loss angle | G* | Loss angle |
| (Pa) | (degree) | (Pa) | (degree) | (Pa) | (degree) | (Pa) | (degree) | (Pa) | (degree) | (Pa) | (degree) |
| 1.80E+05 | 40.6 | | | | | 144496 | 31.183 | | | | |
| 222,000 | 38.8 | | | | | | | | | | |
| 271,000 | 36.8 | | | | | | | | | | |
| 326,000 | 34.7 | | | | | | | | | | |
| 388,000 | 32.7 | | | | | | | | | | |
| 456,000 | 30.6 | | | | | | | | | | |

modulus of 2,000 Pa. As Figure 2 shows, the loss angle is lower than each of these comparative angles. It is believed that Figure 2 is indicative of improved melt strength in the polymer of Example 1.

*Film Examples*

Example 13. A monolayer film comprising the ethylene-based polymer of Example 1 having a thickness of 45 $\mu$m is formed in a high-stalk film-forming process at a blow-up ratio (BUR) of 6.6 and a neck height ratio (NHR) of 12.

Example 14. A monolayer film comprising the ethylene-based polymer of Example 1 having a thickness of 30 $\mu$m is formed in a high-stalk film-forming process at a BUR of 3.4 and a NHR of 3.5.

Example 15: A monolayer film comprising a metallocene-catalyzed, long-chain branched, ethylene/1-hexene co-polymer having a CBDI $\geq$ 70.0, a density 0.927 g/cm$^3$, a melt index of 0.30 g/10 min., available from ExxonMobil Chemical Company as Enable™ 27-03, and having a thickness of 30 $\mu$m is formed in an in-pocket film-forming process at a BUR of 3.

Example 16: A monolayer film comprising a high molecular weight, film grade polyethylene having a density of 0.952 g/cm$^3$, a melt index ($I_{2.16}$) of 0.050 g/10 min., and a high-load melt index ($I_{21.6}$) of 9.5 g/10 min., available from ExxonMobil Chemical Company as HDPE HTA 001HP2, and having a thickness of 30 $\mu$m is formed in a high-stalk film-forming process at a BUR of 4 and a NHR of 8.

Example 17: The film of Example 16 is substantially repeated except that the film has a thickness of 15 $\mu$m.

Example 18: A monolayer film comprising a polyethylene having a density of 0.950 g/cm$^3$ and a melt index ($I_{2.16}$) of 0.05 g/10 min., (Formosa HDPE 9001) having a thickness of 20 $\mu$m is formed in a high-stalk film-forming process at a BUR of 6 and a NHR of 11.

Example 19: A 3-layer film having comprising outer layers of an ethylenepropylene-butene terpolymer and a core layer comprising the metallocene-catalyzed, long-chain branched, ethylene/1-hexene copolymer of Example 15. The thickness of each skin layer is 20.0% of the core layer and the total film thickness is 14 $\mu$m is formed in a double bubble film-forming process at a BUR of 5

Example 20: A monolayer film comprising the metallocene-catalyzed, long-chain branched, ethylene/1-hexene copolymer of Example 15 having a thickness of 30 $\mu$m is formed in a high-stalk film-forming process at a BUR of 4 and a NHR of 4.

Example 21: A monolayer film comprising the metallocene-catalyzed, long-chain branched, ethylene/1-hexene copolymer of Example 15 having a thickness of 15 $\mu$m is formed in a high-stalk film-forming process at a BUR of 4 and a NHR of 4.

Example 22: A monolayer film comprising the metallocene-catalyzed, long-chain branched, ethylene/1-hexene copolymer of Example 6 having a thickness of 15 $\mu$m is formed in a high-stalk film-forming process at a BUR of 4 and a NHR of 4.

Example 23: A 3-layer film having comprising outer layers of the polymer of Example 2 and a core layer comprising ethylene-based polymer of Example 1 having a total film thickness of 30 $\mu$m is formed in a high-stalk film-forming process at a BUR of 2.4 and a NHR of 3.5. The thickness of each outer layer is 50.0% of the core layer thickness.

Example 24: A 3-layer film having comprising outer layers of the polymer of Example 7 and a core layer comprising ethylene-based polymer of Example 1 having a total film thickness of 30 $\mu$m is formed in a high-stalk film-forming process at a BUR of 6.75 and a NHR of 12. The thickness of each outer layer is 1/3 of the core layer thickness.

Example 25: A 3-layer film having comprising outer layers of the polymer of Example 2 and a core layer comprising ethylene-based polymer of Example 1 having a total film thickness of 15 $\mu$m is formed in a high-stalk film-forming process at a BUR of 6.75and a NHR of 12. The thickness of each outer layer is 1/3 of the core layer thickness.

Example 26: A 3-layer film having comprising outer layers of a metallocene-catalyzed ethylene-hexene copolymer having a CDBI > 60%, a density of 0.918 g/cm$^3$ and a melt index ($I_{2.16}$) of 2.0 g/10 min. and available from ExxonMobil Chemical Company as Exceed™ 2018 and a core layer comprising ethylene-based polymer of Example 1 having a total film thickness of 15 $\mu$m is formed in a high-stalk film-forming process at a BUR of 6.75and a NHR of 12. The thickness of each outer layer is 1/3 of the core layer thickness.

The properties of the films of Examples 13-26 are collected in Table 2.

**TABLE 2**

| Example Number | 13 | 14 | 15 | 16 | 17 | 18 | 19 | 20 | 21 | 22 | 23 | 24 | 25 | 26 |
|---|---|---|---|---|---|---|---|---|---|---|---|---|---|---|
| Layer Ratio | mon o | mon o | mon o | mon o | mon o | mon o | 1/5/ 1 | mon o | mon o | mon o | 1/2/ 1 | 1/3/ 1 | 1/3/ 1 | 1/3/ 1 |
| Average Gauge ($\mu$m) | 45 | 30 | 30 | 30 | 15 | 20 | 14 | 30 | 15 | 15 | 30 | 30 | 15 | 15 |
| BUR | 6.6 | 3.4 | 3 | 4 | 6 | 5 | 4 | 4 | 4 | 4 | 2.4 | 6.75 | 6.75 | 6.75 |
| NHR | 12 | 3.5 | -- | 8 | 8 | 11 | -- | 4 | 4 | 4 | 3.5 | 12 | 12 | 12 |
| MD Elmendor f Tear (g/$\mu$m) | 2.0 | 0.9 | 1.9 | 1.0 | 0.7 | 0.4 | 0.2 | 6.3 | 3.1 | 3.5 | 2.3 | 2.7 | 5.0 | 1.8 |
| TD Elmendor f Tear (g/$\mu$m) | 3.3 | 0.5 | 19.7 | 7.0 | 0.3 | 23.0 | 0.3 | 13.2 | 13.6 | 12.4 | 15.5 | 5.8 | 5.4 | 4.9 |
| Elmendor f Tear, TD/MD ratio | 1.65 | 0.56 | 10.3 7 | 7.0 | 0.43 | 57.5 0 | 1.5 | 2.09 | 4.38 | 3.54 | 6.74 | 2.15 | 1.08 | 2.72 |
| Dart Impact (g/$\mu$m) | 5.4 | 2.1 | 4.7 | 6.6 | 11.6 | <3.8 | 15.1 | 7.2 | 10.7 | 5.6 | 5.3 | 5.7 | 6.0 | 5.3 |
| Puncture Force (N/ $\mu$m) | 1.4 | -- | -- | -- | 1.5 | 8.3 | -- | -- | -- | -- | -- | 1.5 | 1.8 | 1.4 |
| MD Shrink (%) | 71 | 82 | 81 | 86 | 88 | 84 | 77 | 74 | 81 | 83 | 77 | 71 | 65 | 80 |
| TD Shrink (%) | 50 | 38 | 27 | 49 | 50 | 45 | 74 | 50 | 45 | 44 | 23 | 50 | 45 | 42 |
| Haze (%) | 34 | >30 | 15.2 | >30 | >30 | 70 | 4.7 | 17.2 | 20.4 | 27.1 | 4.6 | 10 | 6.1 | 6.6 |
| Gloss, 45° | 22 | 24 | 38 | -- | -- | 9 | 71 | 33.2 | 28.1 | 25.3 | 86.7 | 59 | 74 | 78 |
| Clarity (%) | 45 | 35 | 70 | -- | -- | 0 | -- | -- | -- | -- | 85 | 63 | 55 | 59 |

In the Examples 27-32, the effect of BUR and NHR conditions on film properties was evaluated for monolayer films of the ethylene-based polymer of Example 1. These results are collected in Table 3.

**TABLE 3**

| Example Number | 27 | 28 | 29 | 30 | 31 | 32 |
|---|---|---|---|---|---|---|
| Layer Ratio | mono | mono | mono | mono | mono | mono |
| Average Gauge ($\mu$m) | 30 | 30 | 45 | 45 | 30 | 30 |
| BUR | 3.4 | 4.0 | 6.5 | 6.5 | 3.4 | 3.4 |
| NHR | 3.5 | 3.5 | 9 | 12 | 3.1 | 3.5 |
| MD Elmendorf Tear (g/ $\mu$m) | 0.9 | 1.2 | 1.3 | 2.0 | 0.8 | 0.9 |
| TD Shrink (%) | 38 | 41 | 44 | 50 | 36 | 38 |

Example 33: A two-layer coextrusion film for a geomembrane application comprising essentially the ethylene-based polymer of Example 1 contained in both layers having a thickness of 2 mm is formed in a pocket film-forming process at a blow-up ratio (BUR) of 1.2. 3 wt. % masterbatch was added to provide additional antioxidant and carbon black. The film with a bubble circumference of 7000 mm is extruded at a rate of 750 kg/hr using a die gap of 2.8 mm. The properties of the film of Example 33 are set out in Table 4.

**TABLE 4**

| | unit | method | |
|---|---|---|---|
| Oxidative Induction Time | min | ASTM D3895 | 174 |
| **Tensile** | | | |
| Strength at Yield - MD | KN/m | ASMT D6693 | 35.2 |
| Strength at Yield - MD | lb/in | ASMT D6693 | 201 |
| Elongation at Yield - MD | % | ASMT D6693 | 16 |
| Strength at Break - MD | KN/m | ASMT D6693 | 62.5 |
| Strength at Break - MD | lb/in | ASMT D6694 | 357 |
| Elongation at Break - MD | % | ASMT D6695 | 860 |
| Strength at Yield - TD | KN/m | ASMT D6693 | 35.4 |
| Strength at Yield - TD | lb/in | ASMT D6693 | 202 |
| Elongation at Yield - TD | % | ASMT D6693 | 16 |
| Strength at Break - TD | KN/m | ASMT D6693 | 63.3 |
| Strength at Break - TD | lb/in | ASMT D6694 | 361 |
| Elongation at Break - TD | % | ASMT D6695 | 916 |
| **Tear Resistance** | | | |
| Tear Strength - MD | N | ASTM D1004 | 286 |
| Specimen thickness - MD | mm | ASTM D1004 | 1.83 |
| Maximum Extension - MD | mm | ASTM D1004 | 20 |
| Tear Strength - TD | N | ASTM D1004 | 280 |
| Specimen thickness - TD | mm | ASTM D1004 | 1.84 |
| Maximum Extension - TD | mm | ASTM D1004 | 19 |
| **Puncture Resistance** | | | |
| Puncture Resistance | N | ASTM D4833 | 685.2 |

(continued)

| Puncture Resistance | | | |
|---|---|---|---|
| Puncture Resistance | lb | ASTM D4833 | 154.0 |
| **Single Point-Notched Constant Tensile Load** | hr | ASTM D5397 | **627** |

Although the present invention has been described in considerable detail with reference to certain aspects and embodiments thereof, other aspects and embodiments are possible. Therefore, the spirit and scope of the appended claims should not be limited to the description of the embodiments contained herein.

Certain features of the present invention are described in terms of a set of numerical upper limits and a set of numerical lower limits. It should be appreciated that ranges from any lower limit to any upper limit are within the scope of the invention unless otherwise indicated.

## Claims

1.  An ethylene-based polymer comprising 80.0 to 99.0 wt.% of polymer units derived from ethylene and 1.0 to 20.0 wt.% of polymer units derived from one or more $C_3$ to $C_{20}$ $\alpha$-olefin comonomers; the ethylene-based polymer having:

    a. a CDBI $\geq$ 70.0%;
    b. a melt index, $I_{2.16}$, of 0.05 to 0.35 g/10 min.;
    c. a density of from 0.935 to 0.955 g/cm$^3$; and
    d. a MWD of 2.5 to 5.5.

2.  The ethylene-based polymer of claim 1, wherein the ethylene-based polymer has a density of 0.935 to 0.945 g/cm$^3$.

3.  The ethylene-based polymer of claims 1-2, wherein the ethylene-based polymer has a melt index, $I_{2.16}$, of 0.08 to 0.35 g/10 min.

4.  The ethylene-based polymer of claims 1-3, wherein the ethylene-based polymer has a 20° Gloss of 5.0 to 15.0.

5.  The ethylene-based polymer of claims 1-3, wherein the ethylene-based polymer has a 60° Gloss of 30.0 to 60.0.

6.  The ethylene-based polymer of claims 1-3, wherein the ethylene-based polymer has an 80° Gloss of 60.0 to 80.0.

7.  The ethylene-based polymer of claims 1-6 having a complex modulus, $G_{50}^{*}$, $< 50.00 \times 10^3$ Pa.

8.  The ethylene-based polymer of claims 1-6 having a complex modulus, $G_{60}^{*}$, $< 2.50 \times 10^3$ Pa.

9.  An article of manufacture comprising the ethylene-based polymer of claims 1-8, and wherein said article is formed by a manufacturing process selected from the group consisting of injection molding, blow molding, extrusion coating, foaming, casting, and combinations thereof.

10. An article of manufacture comprising the ethylene-based polymer of claims 1-8, wherein said article comprises a thermoformed extruded sheet.

11. An article of claim 10, wherein the thermoformed extruded sheet is a multilayer extruded sheet having a cap layer comprising the ethylene-based polymer.

12. An article of manufacture of claim 9, wherein said article is an extruded monolayer film or an extruded multilayer film.

13. A multilayer film comprising an outer layer A in surface contact with a first surface of a core layer comprising the ethylene-based polymer of claims 1-8, a second surface of the core layer in surface contact with a layer B, wherein the multilayer film has a TD shrink of 20.0 to 70.0%.

14. The multilayer film of claim 13,

wherein the film has MD Elmendorf Tear of 0.5 to 10 g/$\mu$m, or
wherein the ethylene-based polymer of the core layer has 0.05 to 0.5 long-chain branches per/1000C atoms.

**15.** A polymer blend composition comprising:

0.1 to 99.9 wt.% of an ethylene-based polymer comprising 80.0 to 99.0 wt.% of polymer units derived from ethylene and 1.0 to 20.0 wt.% of polymer units derived from one or more $C_3$ to $C_{20}$ $\alpha$-olefin comonomers; the ethylene-based polymer having:

    a. a CDBI $\geq$ 70.0%;
    b. a melt index, $I_{2.16}$, of about 0.05 to about 0.35 g/10 min.;
    c. a density of from about 0.935 to about 0.950 g/cm$^3$;
    d. a MWD of about 2.5 to about 5.5; and

0.1 to 99.9 wt.% of a polymer selected from the group consisting of high density polyethylene, linear low density polyethylene, low density polyethylene, medium density polyethylene, differentiated polyethylene, and combinations thereof.

**Patentansprüche**

**1.** Ethylenbasiertes Polymer, das 80,0 bis 99,0 Gew.-% Polymereinheiten, die von Ethylen abgeleitet sind und 1,0 bis 20,0 Gew.-% Polymereinheiten, die von einem oder mehreren $C_3$ bis $C_{20}$ $\alpha$-Olefincomonomeren abgeleitet sind, umfasst, wobei das ethylenbasierte Polymer:

    a. einen Zusammensetzungsverteilungsbreitenindex (CDBI) $\geq$ 70,0%,
    b. einen Schmelzindex, $I_{2,16}$, von 0,05 bis 0,35 g/10 min,
    c. eine Dichte von 0,935 bis 0,955 g/cm$^3$ und
    d. eine Molekulargewichtsverteilung (MWD) von 2,5 bis 5,5 aufweist.

**2.** Ethylenbasiertes Polymer nach Anspruch 1, wobei das ethylenbasierte Polymer eine Dichte von 0,935 bis 0,945 g/cm$^3$ aufweist.

**3.** Ethylenbasiertes Polymer nach den Ansprüchen 1-2, wobei das ethylenbasierte Polymer einen Schmelzindex, $I_{2,16}$, von 0,08 bis 0,35 g/10 min aufweist.

**4.** Ethylenbasiertes Polymer nach den Ansprüchen 1-3, wobei das ethylenbasierte Polymer einen 20°-Glanz von 5,0 bis 15,0 aufweist.

**5.** Ethylenbasiertes Polymer nach den Ansprüchen 1-3, wobei das ethylenbasierte Polymer einen 60°-Glanz von 30,0 bis 60,0 aufweist.

**6.** Ethylenbasiertes Polymer nach den Ansprüchen 1-3, wobei das ethylenbasierte Polymer einen 80°-Glanz von 60,0 bis 80,0 aufweist.

**7.** Ethylenbasiertes Polymer nach den Ansprüchen 1-6, wobei das ethylenbasierte Polymer einen komplexen Modul, $G_{50}{}^*$, < 50,00$\times$10$^3$ Pa aufweist.

**8.** Ethylenbasiertes Polymer nach den Ansprüchen 1-6, wobei das ethylenbasierte Polymer einen komplexen Modul, $G_{60}{}^*$, < 2,50$\times$10$^3$ Pa aufweist.

**9.** Erzeugnis, das das ethylenbasierte Polymer gemäß den Ansprüchen 1-8 umfasst und wobei das Erzeugnis durch ein Herstellungsverfahren gebildet wird, das aus der Gruppe bestehend aus Spritzgießen, Blasformen, Extrusionsbeschichten, Schäumen, Gießen und Kombinationen davon ausgewählt ist.

**10.** Erzeugnis, das das ethylenbasierte Polymer gemäß den Ansprüchen 1-8 umfasst, wobei das Erzeugnis eine warmgeformte extrudierte Folie umfasst.

**11.** Erzeugnis nach Anspruch 10, wobei die warmgeformte extrudierte Folie eine mehrschichtige extrudierte Folie mit einer Deckschicht ist, die das ethylenbasierte Polymer umfasst.

**12.** Erzeugnis nach Anspruch 9, wobei das Erzeugnis eine extrudierte einschichtige oder eine extrudierte mehrschichtige Folie ist.

**13.** Mehrschichtfolie umfassend eine äußere Schicht A in Oberflächenkontakt mit einer ersten Oberfläche einer Innenschicht, die das ethylenbasierte Polymer nach Ansprüchen 1-8 umfasst, eine zweite Oberfläche der Innenschicht in Oberflächenkontakt mit einer Schicht B, wobei die Mehrschichtfolie eine Schrumpfung in transversaler Richtung (TD) von 20,0 bis 20,0% aufweist.

**14.** Mehrschichtfolie nach Anspruch 13, wobei die Folie eine Elmendorf-Reißfestigkeit in Maschinenrichtung (MD) von 0,5 bis 10 g/$\mu$m aufweist oder wobei das ethylenbasierte Polymer der Innenschicht 0,05 bis 0,5 langkettige Verzweigungen pro 1000 Kohlenstoffatomen aufweist.

**15.** Polymermischung umfassend:

0,1 bis 99,9 Gew.-% ethylenbasiertes Polymer, das 80,0 bis 99,0 Gew.-% Polymereinheiten, die von Ethylen abgeleitet sind, und 1,0 bis 20,0 Gew.-% Polymereinheiten, die von einem oder mehreren $C_3$ bis $C_{20}$ $\alpha$-Olefincomonomeren abgeleitet sind, umfasst, wobei das ethylenbasierte Polymer:

a. einen CDBI $\geq$ 70,0%,
b. einen Schmelzindex, $I_{2,16}$, von etwa 0,05 bis etwa 0,35 g/10 min,
c. eine Dichte von etwa 0,935 bis etwa 0,950 g/cm$^3$
d. eine MWD von etwa 2,5 bis etwa 5,5 aufweist und

0,1 bis 99,9 Gew.-% Polymer, das aus der Gruppe bestehend aus Polyethylen hoher Dichte, linearem Polyethylen niedriger Dichte, Polyethylen niedriger Dichte, Polyethylen mittlerer Dichte, differenziertem Polyethylen und Kombinationen davon ausgewählt ist.

**Revendications**

**1.** Polymère à base d'éthylène comprenant 80,0 à 99,0 % en poids de motifs de polymère dérivés d'éthylène et 1,0 à 20,0 % en poids de motifs de polymère dérivés d'un ou plusieurs comonomères de $\alpha$-oléfine en $C_3$ à $C_{20}$ ; le polymère à base d'éthylène ayant :

a. un CDBI $\geq$ 70,0 % ;
b. un indice de fluage, $I_{2,16}$, de 0,05 à 0,35 g/10 min ;
c. une masse volumique de 0,935 à 0,955 g/cm$^3$ ; et
d. une MWD de 2,5 à 5,5.

**2.** Polymère à base d'éthylène de la revendication 1, le polymère à base d'éthylène ayant une masse volumique de 0,935 à 0,945 g/cm$^3$.

**3.** Polymère à base d'éthylène des revendications 1 à 2, le polymère à base d'éthylène ayant un indice de fluage, $I_{2,16}$, de 0,08 à 0,35 g/10 min.

**4.** Polymère à base d'éthylène des revendications 1 à 3, le polymère à base d'éthylène ayant un brillant à 20° de 5,0 à 15,0.

**5.** Polymère à base d'éthylène des revendications 1 à 3, le polymère à base d'éthylène ayant un brillant à 60° de 30,0 à 60,0.

**6.** Polymère à base d'éthylène des revendications 1 à 3, le polymère à base d'éthylène ayant un brillant à 80° de 60,0 à 80,0.

**7.** Polymère à base d'éthylène des revendications 1 à 6 ayant un module complexe, $G^*_{50}$, < 50,00x10$^3$ Pa.

**8.** Polymère à base d'éthylène des revendications 1 à 6 ayant un module complexe, $G^*_{60}$, < 2,50x10$^3$ Pa.

**9.** Article de fabrication comprenant le polymère à base d'éthylène des revendications 1 à 8, et ledit article étant formé par un procédé de fabrication choisi dans le groupe constitué du moulage par injection, du moulage par extrusion-soufflage, du couchage par extrusion, du moussage, de la coulée, et de combinaisons de ceux-ci.

**10.** Article de fabrication comprenant le polymère à base d'éthylène des revendications 1 à 8, ledit article comprenant une feuille extrudée thermoformée.

**11.** Article de la revendication 10, dans lequel la feuille extrudée thermoformée est une feuille extrudée multicouche ayant une couche de coiffe comprenant le polymère à base d'éthylène.

**12.** Article de fabrication de la revendication 9, ledit article étant un film monocouche extrudé ou un film multicouche extrudé.

**13.** Film multicouche comprenant une couche externe A en contact de surface avec une première surface d'une couche centrale comprenant le polymère à base d'éthylène des revendications 1 à 8, une deuxième surface de la couche centrale en contact de surface avec une couche B, le film multicouche ayant un retrait TD de 20,0 à 70,0 %.

**14.** Film multicouche de la revendication 13,
le film ayant une résistance à la déchirure MD Elmendorf de 0,5 à 10 g/$\mu$m, ou
dans lequel le polymère à base d'éthylène de la couche centrale comporte 0,05 à 0,5 branchements de chaîne longue par/1000 atomes C.

**15.** Composition de mélange de polymère comprenant :

0,1 à 99,9 % en poids d'un polymère à base d'éthylène comprenant 80,0 à 99,0 % en poids de motifs de polymère dérivés d'éthylène et 1,0 à 20,0 % en poids de motifs de polymère dérivés d'un ou plusieurs comonomères de $\alpha$-oléfine en C$_3$ à C$_{20}$ ; le polymère à base d'éthylène ayant :

    a. un CDBI ≥ 70,0 % ;
    b. un indice de fluage, I$_{2,16}$, d'environ 0,05 à environ 0,35 g/10 min ;
    c. une masse volumique d'environ 0,935 à 0,950 g/cm$^3$ ;
    d. une MWD d'environ 2,5 à 5,5 ; et

0,1 à 99,9 % en poids d'un polymère choisi dans le groupe constitué de polyéthylène haute densité, polyéthylène basse densité linéaire, polyéthylène basse densité, polyéthylène moyenne densité, polyéthylène différencié, et des combinaisons de ceux-ci.

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6225432 B
- WO 9303093 A
- US 5466649 A
- US 6476171 B
- US 6225426 B
- US 7951873 B
- US 4543399 A
- US 4588790 A
- US 5028670 A
- US 5317036 A
- US 5352749 A
- US 5405922 A
- US 5436304 A
- US 5453471 A
- US 5462999 A
- US 5616661 A
- US 5668228 A
- US 5627242 A
- US 5665818 A
- US 5677375 A
- EP 0794200 A
- EP 0802202 A
- EP 634421 B
- WO 9608520 A
- US 5741563 A
- US 6342566 B
- US 6384142 B
- WO 03040201 A
- WO 9719991 A
- US 20080038533 A
- US 6204349 B
- US 6191227 B
- US 5908679 A
- US 5683767 A
- US 5417561 A
- US 5290498 A

### Non-patent literature cited in the description

- **M.VAN GURP ; J. PALMEN.** *Rheology Bulletin,* 1998, vol. 67, 5
- **WILD et al.** *J. Poly. Sci. Poly. Phys. Ed.,* 1982, vol. 20, 441
- *Macromolecules,* 2001, vol. 34 (19), 6812
- **RANDALL.** *Journal of Macromolecular Science, Rev. Macromol. Chem. Phys.,* vol. C29 (2&3), 285-297
- *Macromolecules,* 2000, vol. 33, 7489-7499
- **SCHOLTE et al.** *J. App. Polymer Sci.,* 1984, vol. 29, 3763-3782
- ZIEGLER CATALYSTS. Springer-Verlag, 1995
- **RESCONI et al.** Selectivity in Propene Polymerization with Metallocene Catalysts. *CHEM. REV.,* 2000, vol. 100, 1253-1345
- METALLOCENE-BASED POLYOLEFINS. Wiley & Sons, 2000, vol. I, II